# EUROPEAN PATENT APPLICATION

(11) **EP 2 911 166 A1**
(43) Date of publication of application: **26.08.2015**
(21) Application number: 15152280.2
(22) Date of filing: 23.01.2015
(51) Int. Cl.: H01F 27/28, H01F 38/14

(54) **Power receiving device and power transmitting device**

(30) Priority: 29.01.2014 JP 2014014198
(71) Applicant: Toyota Jidosha Kabushiki Kaisha, Toyota-shi, Aichi 471-8571 (JP)
(72) Inventor: Yuasa, Hiroaki, Toyota-shi,, Aichi 471-8571 (JP)
(74) Representative: TBK

(57) **Abstract**

A power receiving unit (210) of the present power receiving device includes: a core unit (260) formed to have a shape of plate; a spiral coil (250) disposed at the power transmitting unit (410) side of the core unit (260); and a drawn wire (250b) externally drawn from an inner end portion of the spiral coil (250), the core unit (260) having a groove portion (g) formed to extend in a radial direction of the spiral coil (250), the drawn wire (250b) being routed through the groove portion (g) and being drawn externally.

## Description

This nonprovisional application is based on Japanese Patent Application No. 2014-014198 filed on January 29, 2014, with the Japan Patent Office, the entire contents of which are hereby incorporated by reference.

### BACKGROUND OF THE INVENTION

### Field of the Invention

The present invention relates to a power receiving device that contactlessly receives electric power from a power transmitting device.

### Description of the Background Art

As disclosed in Japanese Patent Laying-Open No. 2013-154815, Japanese Patent Laying-Open No. 2013-146154, Japanese Patent Laying-Open No. 2013-146148, Japanese Patent Laying-Open No. 2013-110822, Japanese Patent Laying-Open No. 2013-126327, Japanese Patent Laying-Open No. 2011-258807, and Japanese Patent Laying-Open No. 2013-175734, there has been known a power transfer system that employs a power transmitting device and a power receiving device in order to transmit and receive electric power contactlessly. In Japanese Patent Laying-Open No. 2011-258807, a ferrite core formed to have a shape of plate and a spiral coil provided on a surface of the ferrite core are used as the power receiving device. In Japanese Patent Laying-Open No. 2013-175734, a spiral coil is used for a power receiving device provided in a mobile phone and receiving electric power contactlessly.

### SUMMARY OF THE INVENTION

Such a spiral coil is formed by winding a coil wire such that the diameter thereof becomes larger as it extends from one end to the other end. The coil wire is externally drawn from an inner end portion, and the wire thus drawn passes over the upper surface of the coil. As a result, the power receiving device becomes thick in thickness.

Furthermore, the drawn wire is disposed to transverse magnetic fluxes provided from the coil, with the result that heat may be generated due to magnetic fluxes crossing the drawn wire. The same problem arises also in a power transmitting device.

The present invention has been made in view of the foregoing problem, and provides a power receiving device and a power transmitting device, both of which include configurations capable of suppressing increase in the thicknesses of the power receiving device and the power transmitting device.

A power receiving device has a power receiving unit that contactlessly receives electric power from a power transmitting unit having a power transmitting coil when facing the power transmitting unit, the power receiving unit including a core unit formed to have a shape of plate, a spiral coil disposed at the power transmitting unit side of the core unit, and a drawn wire externally drawn from an inner end portion of the spiral coil, the core unit having a groove portion formed to extend in a radial direction of the spiral coil, the drawn wire being routed through the groove portion and being externally drawn.

According to this configuration, since the drawn wire of the spiral coil is routed through the groove portion and is externally drawn, the substantial thickness of the power receiving unit corresponds to only a total of the thickness of the core unit and the thickness of the spiral coil, whereby the thickness of the drawn wire is not included in the substantial thickness of the power receiving unit. As a result, the thickness of the power receiving unit can be suppressed from being increased, thereby suppressing increase in the thickness of the power receiving device.

Moreover, the groove portion is formed to extend in the radial direction of the spiral coil, so that the drawn wire routed through the groove portion does not transverse the magnetic fluxes provided from the coil. As a result, generation of heat caused by the magnetic fluxes can be suppressed.

A power transmitting device has a power transmitting unit that contactlessly transmits electric power to a power receiving unit having a power receiving coil when facing the power receiving unit, the power transmitting unit including a core unit formed to have a shape of plate, a spiral coil disposed at the power receiving unit side of the core unit, and a drawn wire externally drawn from an inner end portion of the spiral coil, the core unit having a groove portion formed to extend in a radial direction of the spiral coil, the drawn wire being routed through the groove portion and being externally drawn.

According to this configuration, since the drawn wire of the spiral coil is routed through the groove portion and is externally drawn, the substantial thickness of the power transmitting unit corresponds to only a total of the thickness of the core unit and the thickness of the spiral coil, whereby the thickness of the drawn wire is not included in the substantial thickness of the power transmitting unit. As a result, the thickness of the power transmitting unit can be suppressed from being increased, thereby suppressing increase in the thickness of the power transmitting device.

Moreover, the groove portion is formed to extend in the radial direction of the spiral coil, so that the drawn wire routed through the groove portion does not transverse the magnetic fluxes provided from the coil. As a result, generation of heat caused by the magnetic fluxes can be suppressed.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 schematically shows a power transfer system of an embodiment.
Fig. 2 is a plan view showing a structure of a power receiving unit of the embodiment.
Fig. 3 is a cross sectional view taken along a line III-III in Fig. 2.
Fig. 4 is a plan view showing a structure of a power receiving unit in a background art.
Fig. 5 is a cross sectional view taken along a line V-V in Fig. 4.
Fig. 6 is a plan view showing a structure of a power transmitting unit of the embodiment.
Fig. 7 is a cross sectional view taken along a line VII-VII in Fig. 6.

### DESCRIPTION OF THE PREFERRED EMBODIMENTS

The following describes an embodiment based on the present invention with reference to figures. When referring to the number, an amount, or the like in the description of the embodiment, the scope of the present invention is not necessarily limited to the number, the amount, or the like unless otherwise stated particularly. In the description of the embodiment, the same components and corresponding components are given the same reference characters and may not be described repeatedly.

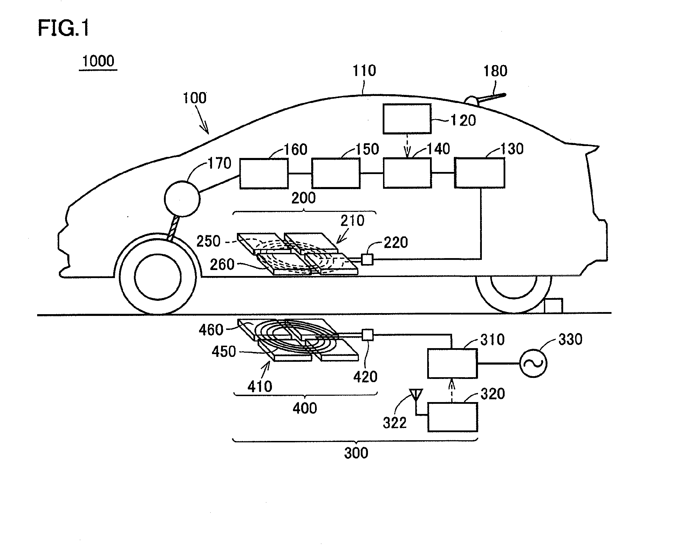

With reference to Fig. 1, a power transfer system 1000 in a first embodiment will be described. Fig. 1 schematically shows the entire configuration of power transfer system 1000. Power transfer system 1000 includes an electrically powered vehicle 100 (vehicle) and an external power feeding device 300.

### (Electrically Powered Vehicle 100)

With reference to Fig. 1, electrically powered vehicle 100 includes a vehicle main body 110 and a power receiving device 200. Provided in vehicle main body 110 are a vehicle ECU 120 (control unit), a rectifier 130, a DC/DC converter (hereinafter, simply referred to as "converter") 140, a battery 150, a power control unit (hereinafter, simply referred to as "PCU") 160, a motor unit 170, a communication unit 180, and the like. Power receiving device 200 has a power receiving coil 250, and is disposed on the bottom surface of vehicle main body 110.

External power feeding device 300 includes a power transmitting device 400, and power transmitting device 400 has a power transmitting coil 450. When power receiving coil 250 of power receiving device 200 faces power transmitting coil 450 of power transmitting device 400, power receiving device 200 receives electric power contactlessly from power transmitting device 400. Power receiving device 200 has a power receiving unit 210, a capacitor 220 connected to power receiving unit 210, and a shield described below. Power receiving unit 210 has a solenoid type core unit 260 and power receiving coil 250.

Power receiving coil 250 has a stray capacitance, and is connected to rectifier 130. An electric circuit is formed by a coefficient of induction of power receiving coil 250, the stray capacitance of power receiving coil 250, and the electric capacitance of capacitor 220. Capacitor 220 and power receiving coil 250 are connected to each other in series, but they may be connected to each other in parallel.

In power transfer system 1000, when vehicle ECU 120 detects that a power feeding button is set to the ON state while vehicle main body 110 is non-operational, the operation mode of the vehicle is switched to a charging mode. Via communication unit 180, vehicle ECU 120 instructs external power feeding device 300 to perform charging control for battery 150.

### (External Power Feeding Device 300)

External power feeding device 300 includes power transmitting device 400, a high-frequency power device 310, and a power transmitting ECU 320 and a communication unit 322. High-frequency power device 310 is connected to an AC power source 330. AC power source 330 is a commercial power source, an independent power source device, or the like. Power transmitting device 400 is provided in a parking space, and is connected to high-frequency power device 310. Power transmitting ECU 320 controls driving of high-frequency power device 310 or the like.

Communication unit 322 is a communication interface for performing wireless communication between external power feeding device 300 and electrically powered vehicle 100. From communication unit 180 of electrically powered vehicle 100, communication unit 322 receives battery information, a signal for instructing start, continuation, and stop of power transmission, and a signal for instructing increase or decrease of power to be transmitted, and outputs these pieces of information to power transmitting ECU 320.

Power transmitting device 400 has a power transmitting unit 410, a capacitor 420 connected to power transmitting unit 410, and a shield described below. Power transmitting unit 410 has a solenoid type core unit 440 and power transmitting coil 450. Power transmitting coil 450 has a stray capacitance, and is connected to high-frequency power device 310. An electric circuit is formed by a coefficient of induction of power transmitting coil 450, a stray capacitance of power transmitting coil 450, and an electric capacity of capacitor 420. Capacitor 420 and power transmitting coil 450 are connected to each other in series, but they may be connected to each other in parallel.

High-frequency power device 310 receives electric power from AC power source 330, converts it to high-frequency electric power, and supplies the converted high-frequency electric power to power transmitting coil 450. Power transmitting coil 450 contactlessly transmits electric power to power receiving coil 250 of power receiving unit 210 by means of electromagnetic induction.

Thus, in power transmitting device 400, high-frequency power device 310 converts, into the high-frequency electric power, the electric power received from AC power source 330, and supplies the converted high-frequency power to power transmitting coil 450. Each of power transmitting unit 410 and power receiving unit 210 includes the coil (450, 250) and the capacitor (420, 220), and is designed to resonate at a transmission frequency. It is preferable that a Q value indicating the resonance strength of each of power transmitting unit 410 and power receiving unit 210 is equal to or higher than 100.

### (Structure of Power Receiving Unit 210)

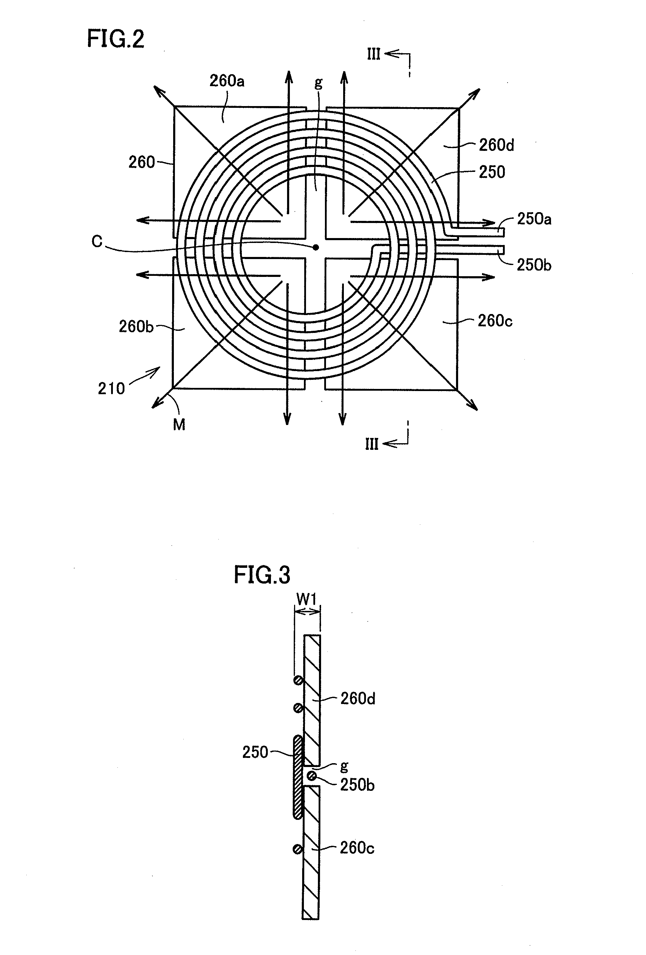

With reference to Fig. 2, the following describes a structure of power receiving unit 210. Fig. 2 is a plan view showing the structure of power receiving unit 210, and Fig. 3 is a cross sectional view taken along a line III-III in Fig. 2.

Power receiving unit 210 in the present embodiment includes: a core unit 260 formed to have a shape of plate; a spiral coil 250 disposed at the power transmitting unit 410 side of core unit 260; a drawn wire 250a externally drawn from an outer end portion of spiral coil 250; and a drawn wire 250b externally drawn from an inner end portion of spiral coil 250.

Core unit 260 has a shape of plate as a whole. In core unit 260, a plurality of split cores are combined and are surrounded by insulating paper. For each of the split cores, ferrite is used.

For core unit 260 of the present embodiment, four ferrite cores 260a, 260b, 260c, 260d are used, and a groove g is provided between adjacent ones of ferrite cores 260a, 260b, 260c, 260d. It should be noted that one ferrite core may be used for core unit 260 and groove g may be provided in the surface thereof. Groove g is provided to coincide with the radial direction of spiral coil 250. In the present embodiment, center C of the groove having a shape of cross and center C of spiral coil 250 substantially coincide with each other.

Drawn wire 250a externally drawn from the outer end portion of spiral coil 250 is directly connected to capacitor 220 externally provided. Drawn wire 250b externally drawn from the inner end portion of spiral coil 250 is routed through groove portion g and is externally drawn.

Since drawn wire 250b of spiral coil 250 is thus routed through groove portion g and is externally drawn, the substantial thickness of power receiving unit 210 corresponds to only a total (W1) of the thickness of core unit 260 and the thickness of spiral coil 250 as shown in Fig. 3, whereby the thickness of drawn wire 250b is not included in the substantial thickness of power receiving unit 210. As a result, the thickness of power receiving unit 210 can be suppressed from being increased, thereby suppressing increase in the thickness of power receiving device 200.

Furthermore, groove portion g extends in the radial direction of spiral coil 250, so that drawn wire 250b also extends in the radial direction of spiral coil 250. When viewed in a plan view, magnetic fluxes from spiral coil 250 are emitted radially from center C as indicated by arrows M in Fig. 2, so that the direction in which the magnetic fluxes are emitted and the direction in which drawn wire 250b is routed become substantially parallel to each other. As a result, an amount of the magnetic fluxes crossing drawn wire 250b can be reduced. Accordingly, generation of heat caused by the magnetic fluxes can be suppressed.

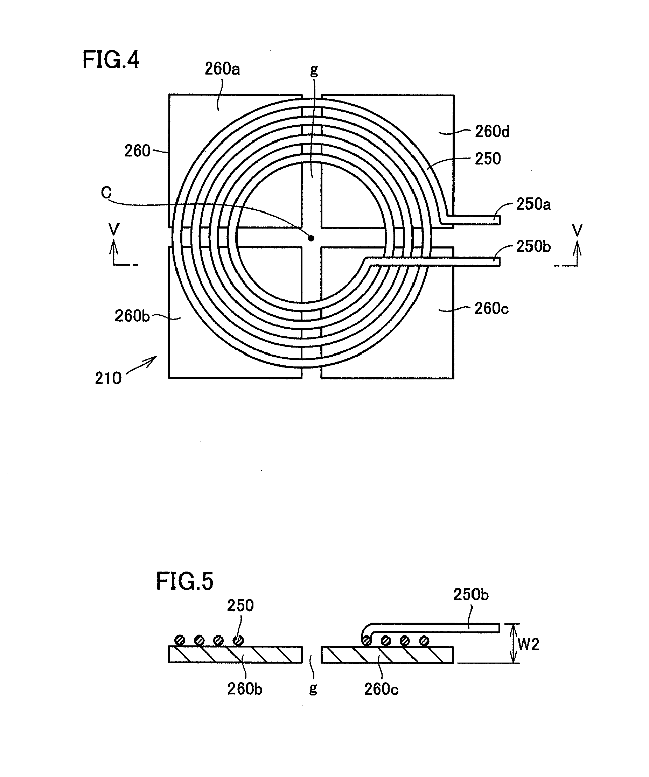

Fig. 4 and Fig. 5 show a case where drawn wire 250b is routed over spiral coil 250. Drawn wire 250b passes over spiral coil 250, so that the substantial thickness of power receiving unit 210 corresponds to a thickness (W2) including not only the thickness of core unit 260 and the thickness of spiral coil 250 but also the thickness of drawn wire 250b, with the result that the thickness of power receiving unit 210 becomes thick.

Moreover, drawn wire 250b crosses the magnetic fluxes from spiral coil 250, thereby causing generation of heat by the magnetic fluxes.

### (Structure of Power Transmitting Unit 410)

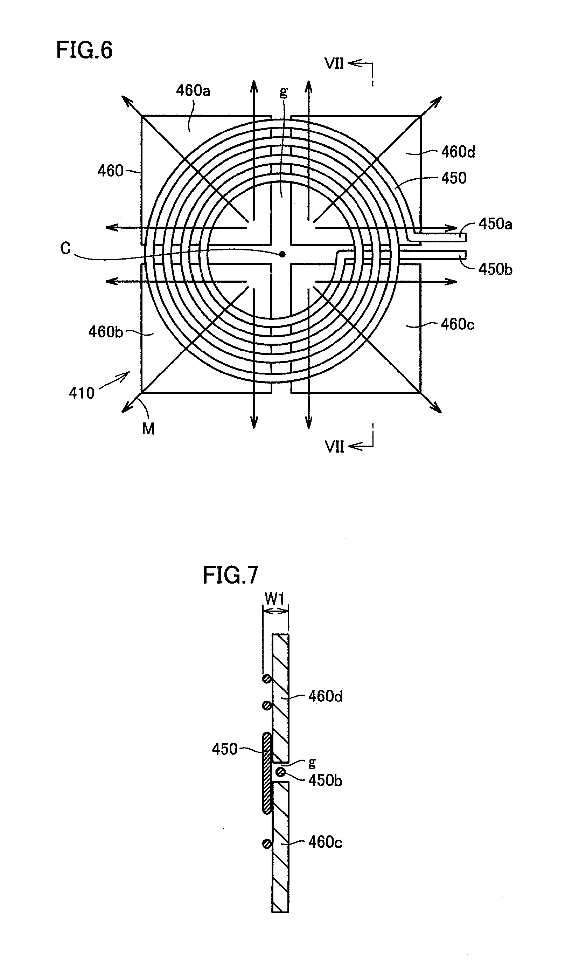

With reference to Fig. 6 and Fig. 7, the structure of power transmitting unit 410 will be described. It is possible to apply the structure of power receiving unit 210 shown in Fig. 2 and Fig. 3 to power transmitting unit 410. Fig. 6 is a plan view showing the structure of power transmitting unit 410, and Fig. 7 is a cross sectional view taken along a line VII-VII in Fig. 6.

Power transmitting unit 410 in the present embodiment includes: a core unit 460 formed to have a shape of plate; a spiral coil 450 disposed at the power receiving unit 210 side of core unit 460; a drawn wire 450a externally drawn from the outer end portion of spiral coil 450; and a drawn wire 450b externally drawn from the inner end portion of spiral coil 450.

Core unit 460 has a shape of plate as a whole. In core unit 460, a plurality of split cores are combined and are surrounded by insulating paper. For each of the split cores, ferrite is used.

For core unit 460 of the present embodiment, four ferrite cores 460a, 460b, 460c, 460d are used, and a groove g is provided between adjacent ones of ferrite cores 460a, 460b, 460c, 460d. It should be noted that one ferrite core may be used for core unit 460 and groove g may be provided in the surface thereof. Groove g is provided to coincide with the radial direction of spiral coil 450. In the present embodiment, center C of the groove having a shape of cross and center C of spiral coil 450 substantially coincide with each other.

Drawn wire 450a externally drawn from the outer end portion of spiral coil 450 is directly connected to capacitor 420 externally provided. Drawn wire 450b externally drawn from the inner end portion of spiral coil 450 is routed through groove portion g and is externally drawn.

Since drawn wire 450b of spiral coil 450 is thus routed through groove portion g and is externally drawn, the substantial thickness of power transmitting unit 410 corresponds to only a total (W1) of the thickness of core unit 460 and the thickness of spiral coil 450 as shown in Fig. 7, whereby the thickness of drawn wire 450b is not included in the substantial thickness of power transmitting unit 410. As a result, the thickness of power transmitting unit 410 can be suppressed from being increased, thereby suppressing increase in the thickness of power transmitting device 400.

Furthermore, groove portion g extends in the radial direction of spiral coil 450, so that drawn wire 450b also extends in the radial direction of spiral coil 450. When viewed in a plan view, magnetic fluxes from spiral coil 450 are emitted radially from center C as indicated by arrows M in Fig. 6, so that the direction in which the magnetic fluxes are emitted and the direction in which drawn wire 450b is routed become substantially parallel to each other. As a result, an amount of the magnetic fluxes crossing drawn wire 450b can be reduced. Accordingly, generation of heat caused by the magnetic fluxes can be suppressed.

Although the present invention has been described and illustrated in detail, it is clearly understood that the same is by way of illustration and example only and is not to be taken by way of limitation, the scope of the present invention being interpreted by the terms of the appended claims.

A power receiving unit (210) of the present power receiving device includes: a core unit (260) formed to have a shape of plate; a spiral coil (250) disposed at the power transmitting unit (410) side of the core unit (260); and a drawn wire (250b) externally drawn from an inner end portion of the spiral coil (250), the core unit (260) having a groove portion (g) formed to extend in a radial direction of the spiral coil (250), the drawn wire (250b) being routed through the groove portion (g) and being drawn externally.

## Claims

1. A power receiving device (200) having a power receiving unit (210) that contactlessly receives electric power from a power transmitting unit (410) having a power transmitting coil (450) when facing said power transmitting unit (410),
said power receiving unit (210) including
a core unit (260) formed to have a shape of plate,
a spiral coil (250) disposed at the power transmitting unit (410) side of said core unit (260), and
a drawn wire (250b) externally drawn from an inner end portion of said spiral coil (250),
said core unit (260) having a groove portion (g) formed to extend in a radial direction of said spiral coil (250),
said drawn wire (250b) being routed through said groove portion (g) and being externally drawn.

2. The power receiving device according to claim 1, wherein said groove portion is a groove (g) having a shape of cross.

3. The power receiving device according to claim 2, wherein a center of said groove (g) having the shape of cross and a center of said spiral coil (250) coincide with each other.

4. The power receiving device according to claim 1, wherein
in said core unit (260), a plurality of split cores (260a, 260b, 260c, 260d) are combined, and
said groove (g) is provided between adjacent ones of said split cores (260a, 260b, 260c, 260d).

5. A power transmitting device having a power transmitting unit (410) that contactlessly transmits electric power to a power receiving unit (210) having a power receiving coil (250) when facing said power receiving unit (210),
said power transmitting unit (410) including
a core unit (460) formed to have a shape of plate,
a spiral coil (450) disposed at the power receiving unit (210) side of said core unit (460), and
a drawn wire (450b) externally drawn from an inner end portion of said spiral coil (450),
said core unit (460) having a groove portion (g) formed to extend in a radial direction of said spiral coil (450),
said drawn wire (450b) being routed through said groove portion (g) and being externally drawn.

6. The power transmitting device according to claim 5, wherein said groove portion is a groove (g) having a shape of cross.

7. The power transmitting device according to claim 6, wherein a center of said groove (g) having the shape of cross and a center of said spiral coil (450) coincide with each other.

8. The power transmitting device according to claim 5, wherein
in said core unit (460), a plurality of split cores (460a, 460b, 460c, 460d) are combined, and
said groove (g) is provided between adjacent ones of said split cores (460a, 460b, 460c, 460d).
